# FASCICULE DE BREVET EUROPEEN

(11) **EP 1 217 503 B1**
(45) Date de publication et mention de la délivrance du brevet: **26.05.2004**
(21) Numéro de dépôt: 01000667.4
(22) Date de dépôt: 28.11.2001
(51) Int. Cl.: G06F 3/023, G06F 1/00

(54) **Procédé de saisie de mots de passe alphanumériques depuis un clavier réduit**
Verfahren zur Eingabe von alphanumerischen Passwörtern unter Benutzung eines verringerten Tastensatzes
Method for inputting alphanumeric passwords from a reduced key set

(30) Priorité: 20.12.2000 FR 0016715
(43) Date de publication de la demande: 26.06.2002
(73) Titulaire: SAGEM S.A., 75015 Paris (FR)
(72) Inventeur: Delflosse, Olivier, 78560 Port-Marly (FR)
(74) Mandataire: Schmit, Christian Norbert Marie

(56) Documents cités:
- US-A- 4 970 504
- US-A- 6 141 011

## Description

La présente invention a pour objet un procédé de saisie de mots de passe alphanumériques depuis un clavier réduit. Plus particulièrement, l'invention concerne un procédé qui permet de transmettre, au sein d'un dispositif électronique, un code de sécurité comportant des lettres, ce code étant saisi de façon sécurisée depuis un clavier réduit. Le domaine de l'invention comprend donc l'ensemble des appareils électroniques dont certaines fonctionnalités nécessitent d'être protégées au moyen d'un code de sécurité, et qui disposent d'une interface d'écriture de type clavier réduit.

Par clavier réduit, on désigne l'ensemble des claviers à partir desquels on peut composer l'ensemble des mots d'une langue donnée, et donc à partir desquels on a accès à l'ensemble des caractères intervenant dans cette langue, différentes lettres et caractères spéciaux étant affectés à une même touche. Ainsi, un clavier réduit comporte nécessairement un nombre de touche inférieur au nombre de lettres qu'il est possible de saisir avec ce clavier. Le fonctionnement de ce type de clavier est géré par des systèmes de traitement de texte particuliers, appelés aussi générateurs de mots, par exemple le système T9. Dans ce système, un clavier réduit comportant notamment dix touches numériques, numérotées de 0 à 9, est utilisé. Chacune de ces dix touches correspond d'une part à un chiffre et d'autre part à un certain nombre de lettres ou de caractères spéciaux, qui sont par exemple les tirets, les apostrophes, les signes de ponctuation ou encore les espaces entre les mots. Dans la mise en oeuvre du système T 9, chaque touche, en plus de sa signification numérique, correspond à au moins trois caractères. Ces caractères ont un certain ordre sur la touche. Lorsque l'on souhaite accéder à un des caractères de ces touches, hors les caractères numériques, il faut d'une part placer le clavier dans un mode de saisie alphabétique, puis appuyer le nombre de fois nécessaire sur la touche pour faire afficher le caractère souhaité. Ce premier mode de sélection d'un caractère souhaité est appelé mode multi-tappe. Il est également possible de maintenir un appui sur une touche, ce qui a pour effet de faire défiler tous les caractères correspondant à cette touche. On relâche alors la touche au moment où le caractère que l'on souhaite afficher apparaît. Ce mode de saisie est appelé mode défilement.

Les claviers réduits de type claviers numériques sont utilisés notamment dans des télécommandes car ils permettent de limiter le nombre de touches utiles pour la saisie d'un texte. Ils sont aujourd'hui utilisés par exemple dans les télécommandes de décodeur de télévision numérique. En effet, ces derniers proposent un nombre de fonctionnalités en croissance permanente, du type accès au réseau Internet, application de vidéo différée, possibilité de programmation complexe... Certaines de ces fonctionnalités nécessitent parfois la saisie d'un texte, le plus souvent court, qui est rendu possible grâce à l'utilisation du clavier réduit. Par ailleurs, d'autres fonctionnalités qui peuvent permettre de limiter l'accès à certains programmes par des utilisateurs particuliers, nécessitent l'utilisation d'un mot de passe, ou code secret. Ce code secret est mémorisé au sein du décodeur de télévision numérique par un utilisateur. Seules les personnes ayant connaissance du code peuvent alors accéder aux fonctionnalités qui sont protégées par ce code. Cependant, par soucis de confidentialité, lorsqu'un utilisateur saisit un code secret au moyen d'un clavier réduit, que ce soit pour définir un nouveau code secret ou pour accéder à une application protégée par ce code secret, des symboles du type étoile masquent sur un écran de visualisation la saisie de ce code secret, voir en particulier le brevet US-A-6 141 011. En conséquence, ces codes secrets sont le plus souvent composés uniquement de chiffres. En effet, la saisie de lettres au moyen du clavier réduit occasionne statistiquement plus d'erreurs de frappe du fait du fonctionnement des différents modes de saisie qui ont été détaillés auparavant. Cependant, un code secret composé d'une succession de chiffres se retient moins facilement qu'un mot choisi par l'utilisateur. Ainsi, dans l'état de la technique, on a la possibilité de choisir des codes secrets composés d'une succession de chiffres que l'on risque d'oublier, ou éventuellement d'une succession de caractères dont la saisie à l'aide d'un clavier réduit est délicate car les caractères saisis sont directement masqués par divers symboles sur l'écran, l'utilisateur n'étant alors pas certain d'avoir saisi le code correct.

Le procédé selon l'invention permet de pallier l'ensemble des problèmes qui viennent d'être exposés. En effet, dans le procédé selon l'invention, un utilisateur peut choisir un code secret présentant la forme d'un mot de passe alphanumérique, c'est à dire d'une succession de lettres et/ou de chiffres, la saisie du mot de passe alphanumérique étant rendue selon l'invention plus contrôlable, moins hasardeuse. A cet effet, le procédé selon l'invention prévoit de définir un temps de dissimulation d'un caractère ou d'un ensemble de caractères, ce temps de dissimulation correspondant à une durée pendant laquelle un caractère saisi est effectivement affiché sur un écran de contrôle avant d'être masqué, éventuellement de façon automatique, par un symbole neutre du type étoile ou autres. Selon l'invention, le temps de dissimulation peut être affecté à la saisie du mot de passe alphanumérique dans son ensemble, ou à la saisie de chaque caractère constituant le mot de passe. Il peut être par ailleurs interrompu par un utilisateur qui a eu le temps de s'assurer, en visualisant l'écran, que le caractère saisi, ou le mot de passe saisi, correspondait bien à celui qu'il souhaitait.

L'invention concerne donc un procédé de saisie d'un mot de passe alphanumérique au moyen d'un clavier réduit selon la revendication 1.

Des modes de mise en oeuvre préférés du procédé selon l'invention sont définis par les revendications 2 à 7.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, une représentation des différents éléments intervenant dans la mise en oeuvre du procédé selon l'invention.
- à la figure 2, un chronogramme illustrant une définition d'un temps de dissimulation particulier.

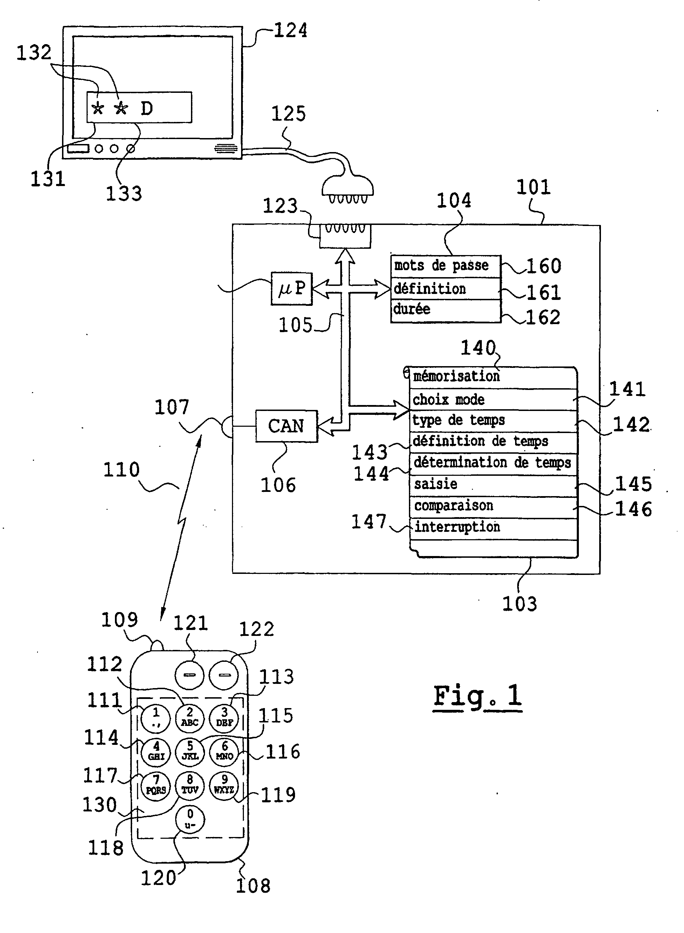

La figure 1 montre un appareil 101. Dans un exemple préféré, cet appareil 101 est un décodeur de télévision numérique. Il comporte notamment un microprocesseur 102, une mémoire de programmes 103 et une mémoire de données 104. Les éléments 102 à 104 sont connectés à un bus de communication bidirectionnel 105. Le bus 105 comporte tous les fils, ou pistes, nécessaires à la circulation des signaux d'adresses, de données, de commandes et d'interruptions. Le décodeur 101 comporte d'autre part un convertisseur analogique numérique 106 connecté d'une part au bus 105, et d'autre part à un capteur infrarouge 107. Le capteur infrarouge 107 reçoit des signaux émis par une télécommande 108. La télécommande 108 émet ces signaux via un capteur infrarouge 109. Il existe donc une liaison 110 entre la télécommande 108 et le décodeur 101. Les signaux reçus par le capteur 107 sont transmis au convertisseur analogique numérique 106 qui les convertit en données numériques. Ces données numériques sont lues par le microprocesseur 102 par l'intermédiaire du bus 105. Dans la pratique, la liaison 110 se fait grâce à des signaux infrarouges, mais il est tout à fait envisageable qu'elle se fasse grâce à des signaux radio.

La télécommande 108 comporte différentes touches disposées sur un clavier réduit 130. Des touches 111 à 119 correspondent aux caractères numériques 1 à 9 respectivement, la touche 120 correspondant au caractère 0. D'autre part, la touche 111 correspond aussi aux caractères "point" et "apostrophe", la touche 102 aux caractères A B C, la touche 103 aux caractères DEF, la touche 104 aux caractères GHI, la touche 105 aux caractères GKL, la touche 106 aux caractères MNO, la touche 107 aux caractères PQRS, la touche 108 aux caractères TUV, 109 la touche aux caractères WXYZ, la touche 120 aux caractères "espace" et "tiret". L'affectation des caractères aux touches 111 à 120 est purement arbitraire, mais utile pour la description. Le procédé selon l'invention peut être mis en oeuvre même si l'affectation des caractères à ces touches est différente. De même, le nombre de touches est arbitraire. Il pourrait y en avoir plus ou moins sans que le principe de l'invention soit changé. Des touches 121 et 122, dites touches de commande, sont également disposées sur la télécommande 108.

L'appareil 101 comporte aussi un connecteur 123 connecté au bus 105. Le connecteur 123 permet d'assurer une liaison entre l'appareil 101 et un écran 124. Cette liaison s'effectue par exemple par un câble 125. Dans l'exemple décrit, le connecteur 123 comporte le circuit nécessaire pour transformer les données numériques qu'il reçoit de la part du microprocesseur 102 en des données analogiques qui peuvent être affichés par l'écran 124. L'écran 124 peut aussi être un écran numérique capable d'assimiler directement les données numériques fournies par le microprocesseur 102. Il peut également être un écran à cristaux liquides. Dans certaines variantes de l'invention, l'écran 124 peut être remplacé ou coexister avec un dispositif de visualisation non représenté disposé sur la télécommande 108. D'une façon générale, les écrans qui interviennent dans la mise en oeuvre du procédé selon l'invention sont des périphériques qui servent notamment à afficher les différents caractères saisis.

La mémoire de programmes 103 contient un ensemble d'applications qui permettent de mettre en oeuvre le procédé selon l'invention. De la même façon, la mémoire de données 104 contient un ensemble de paramètres et d'informations qui sont utilisés pour la mise en oeuvre du procédé selon l'invention. Dans la mémoire de programmes 103, on trouve notamment :
- une application 140, dite application de mémorisation d'un mot de passe, qui permet à un utilisateur de mémoriser un ensemble de codes secrets ou de mots de passes dans une mémoire 160, dite mémoire de mots de passe, de la mémoire de données 104. Chaque mot de passe mémorisé est associé à une ou plusieurs fonctionnalités du décodeur, leur accès étant ainsi protégé ;
- une application 141, dite application de choix de mode, qui permet à un utilisateur de choisir de saisir un mot de passe par exemple selon un mode multi-tappe ou selon un mode de défilement sur le clavier réduit ;
- une application 142, dite application de choix du type de temps de dissimulation, qui permet à un utilisateur de choisir entre un temps de dissimulation global ou un temps de dissimulation particulier;
- une application 143, dite application de définition du temps de dissimulation, qui permet de choisir la manière selon laquelle est calculé le temps de dissimulation d'un ou plusieurs caractères. Les différentes définitions sont contenues dans une mémoire 161, dite mémoire de définition, de la mémoire de données 104 ;
- une application 144, dite application de détermination du temps de dissimulation ; cette application peut intervenir pour certaines définitions du temps de dissimulation ;
- une application 145, dite application de saisie d'un mot de passe, qui permet à un utilisateur de taper sur son clavier réduit un mot de passe pour obtenir les droits d'accès aux applications dont l'accès a été protégé au moyen de l'application de mémorisation de code secret 140;
- une application 146, dite application de comparaison, qui permet de comparer un mot de passe saisi au moyen de l'application de saisie d'un mot de passe 145 et l'ensemble des mots de passes contenus dans la mémoire de mot de passe 160.
- une application 147, dite application d'interruption, qui permet à un utilisateur d'ordonner le masquage immédiat du caractère ou des caractères saisis, en ne tenant plus compte du temps de dissimulation.

Les différentes applications mentionnées contenues dans la mémoire de programmes 103 pourraient être réalisées par des circuits électroniques spécifiques. Par ailleurs, les différents modules de mémoires peuvent être regroupés dans la mémoire de données 104, mais ce n'est pas une obligation. Le microprocesseur 102 gère l'ensemble des échanges d'informations entre ces différents éléments.

Différents exemples de mise en oeuvre du procédé selon l'invention sont à présent expliqués. Lorsqu'un utilisateur active l'application 140 de mémorisation d'un mot de passe, ou l'application 145 de saisie d'un mot de passe, une zone graphique 131 apparaît sur l'écran 124. Cette zone graphique correspond à une fenêtre dans laquelle un mot de passe 133 saisi au moyen du clavier réduit 130 est affiché de façon provisoire. L'utilisateur peut alors choisir son mode de saisie en déclenchant le fonctionnement de l'application 141 qui permet de passer d'un mode multi-tappe à un mode de défilement. Dans un exemple de réalisation préféré, le basculement d'un mode à l'autre est effectué par une simple pression d'une des touches de commande 121 ou 122.

Dans l'exemple représenté à la figure 1, un utilisateur est en train de saisir le mot de passe "code" ; les deux premières lettres (le C et le O) on déjà été remplacées par des symboles neutres correspondant, dans cet exemple, à des étoiles 132, la troisième lettre (le D) n'ayant pas encore été dissimulée par un symbole.

D'une façon générale, un utilisateur, après avoir sélectionné un mode multi-tappe ou un mode de défilement, a la possibilité, au moyen de l'application 142 de choix du type de temps de dissimulation, de définir s'il souhaite choisir un temps de dissimulation global ou un temps de dissimulation particulier.

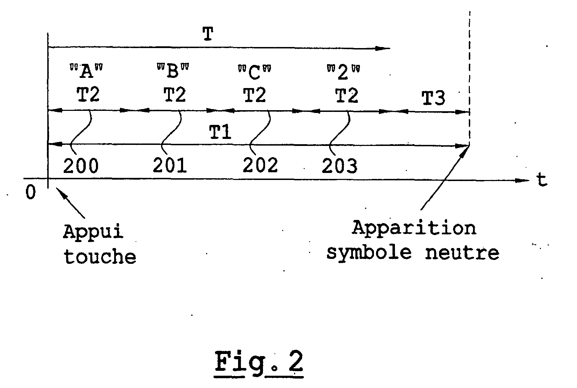

Dans le cas où un utilisateur choisit un temps de dissimulation particulier, plusieurs options lui sont proposées au moyen de l'application de définition du temps de dissimulation 143. Parmi ces options, on trouve par exemple :
- un temps de dissimulation correspondant au passage à la saisie d'une autre lettre du mot de passe par l'utilisateur ; dans ce cas le temps de dissimulation n'est en fait pas une durée, mais correspond à un événement décidé par l'utilisateur. Dès que l'utilisateur a saisi un caractère, qu'il a vérifié dans la fenêtre graphique 131 de l'écran 124 qu'il a bien saisi le caractère souhaité, il passe à la saisie du caractère suivant entraînant ainsi la dissimulation du caractère qu'il vient de taper par un symbole. Pour passer à la saisie du caractère suivant, une des touches de commande 121 ou 122 peut être utilisée.
- un temps de dissimulation correspondant à une durée au bout de laquelle aucune pression sur une des touches du clavier réduit 130 n'a été exercée par l'utilisateur ; dans ce cas, lorsqu'un utilisateur saisit un caractère et attend un certain moment, le caractère saisi sera masqué de façon automatique au bout d'un certain temps, proposant éventuellement automatiquement de passer à la saisie du caractère suivant. Dans cette définition du temps de dissimulation, la durée au bout de laquelle le caractère est masqué est définie au moyen de l'application 144 de détermination du temps de dissimulation et est mémorisée dans un module de mémoire spécifique 162;
- uri temps de dissimulation étant déterminé, pour chaque caractère saisi, par une durée maximale pendant laquelle l'utilisateur est autorisé à saisir un caractère. Dans ce cas, lorsque un utilisateur effectue la saisie (que ce soit en mode multi-tappe ou en mode de défilement) d'un nouveau caractère, il dispose d'un temps limite pour saisir ce caractère avant qu'il ne soit dissimulé par un symbole neutre 132. Ce temps limite peut par exemple correspondre à une durée T1 représentée sur le chronogramme de la figure 2. Cette durée T1 correspond à un temps supérieur à un temps T, dit temps de défilement, égal à un temps élémentaire T2 multiplié par le nombre de caractères associés à une touche, le temps élémentaire T2 correspondant pour sa part à la durée d'affichage d'un caractère en mode défilement, ou, en mode multi-tappe, à la durée minimale d'affichage d'un caractère considérée comme nécessaire pour avoir le temps de lire ce caractère. Par exemple, si une touche est associée à quatre caractères, la durée T1 devra être supérieure à quatre fois la durée T2. Ainsi, si l'utilisateur exerce une pression sur la touche 112, il verra défiler dans la fenêtre graphique 131 pendant une première période 200, la lettre "A", pendant une deuxième période 201, la lettre "B", pendant une troisième période 202, la lettre "C", et pendant une quatrième période 203, le chiffre "2", chaque période ayant une durée T2. Dans ce mode de fonctionnement, le caractère reste affiché sur l'écran pendant une durée égale au minimum à un temps T3, qui correspond à la différence entre le temps de dissimulation T1 et le temps de défilement T. L'exemple décrit montre le cas où on ne peut parcourir qu'une fois l'ensemble des caractères associés à une touche, mais on peut évidemment définir le temps T3 de telle sorte que l'on puisse faire défiler plusieurs fois l'ensemble des caractères associés à une touche.

Dans le cas où l'utilisateur choisit un temps de dissimulation global, différentes définitions du temps de dissimulation lui sont proposées :
- le temps de dissimulation global peut être défini comme étant une durée maximale dont l'utilisateur dispose pour saisir la totalité de son mot de passe ;
- le temps de dissimulation global peut être défini comme un temps dont l'utilisateur dispose pour relire son mot de passe sur l'écran 124 après la saisie du dernier caractère de ce mot de passe.

Une fois le mot de passe saisi, il est comparé au mot de passe approprié pour accéder à la fonctionnalité convoitée.

A tout moment, un utilisateur peut décider de masquer le ou les caractères visibles sur l'écran. A cet effet, il met en oeuvre l'application 147 d'interruption qui permet de ne pas attendre l'échéance normale du temps de dissimulation pour remplacer le ou les caractères saisis par des symboles neutres. Dans un mode de mise en oeuvre préféré du procédé selon l'invention, l'application d'interruption peut être déclenchée directement par une pression sur une des touches de commande 121 ou 122. La rapidité de l'accès à cette fonction peut être utile, notamment pour masquer le ou les caractères saisis à une personne autre que l'utilisateur qui serait soudain en mesure de visualiser ces caractères.

## Revendications

1. Procédé de saisie, par un utilisateur, d'un mot de passe (133) alphanumérique dans un dispositif électronique au moyen d'un clavier réduit (130), différentes lettres et caractères spéciaux étant affectés à au moins une des touches dudit clavier réduit (130), le procédé étant **caractérisé en ce qu'**il comporte les différentes étapes suivantes :
- saisie par l'utilisateur au moyen du clavier réduit (130), d'un ou plusieurs caractères du mot de passe (133);
- affichage, par le dispositif électronique, du ou des caractères saisis pendant une durée dite temps de dissimulation;
- à la fin du temps de dissimulation, masquage par le dispositif du ou des caractères saisis.

2. Procédé de saisie d'un mot de passe selon la revendication précédente **caractérisé en ce que** le temps de dissimulation est déterminé de telle sorte que chaque caractère saisi est masqué avant ou lors de la saisie d'un caractère suivant.

3. Procédé de saisie selon la revendication 1 **caractérisé en ce que** le temps de dissimulation est déterminé de telle sorte que l'ensemble des caractères saisis sont masqués après la saisie de la totalité du mot de passe (133).

4. Procédé de saisie d'un mot de passe selon la revendication précédente **caractérisé en ce que** le temps de dissimulation est déterminé comme étant une durée mesurée dès la fin de la saisie du mot de passe (133).

5. Procédé de saisie d'un mot de passe (133) selon la revendication 2 **caractérisé en ce que** le temps de dissimulation est supérieur à un temps de défilement (T1) de tous les caractères disposés sur une même touche du clavier réduit (130).

6. Procédé de saisie d'un mot de passe selon l'une des revendications précédentes **caractérisé en ce qu'**il comporte une étape consistant en l'exécution, par le dispositif électronique, d'un ordre d'interruption du temps de dissimulation déclenché par l'utilisateur pour masquer (132), de façon anticipée, le ou les caractères saisis.

7. Procédé de saisie d'un mot de passe (133) selon l'une des revendications précédentes **caractérisé en ce que** la saisie au moyen du clavier (130) peut être réalisée selon différents modes de saisie.

## Patentansprüche

1. Verfahren zur Eingabe durch einen Benutzer eines alphanumerischen Passworts (133) in eine elektronische Vorrichtung mittels einer reduzierten Tastatur (130), wobei verschiedene Buchstaben und Spezialzeichen mindestens einer der Tasten der reduzierten Tastatur (130) zugewiesen sind, Verfahren **dadurch gekennzeichnet, dass** es die folgenden verschiedenen Schritte umfasst:
- Eingabe durch den Benutzer mittels einer reduzierten Tastatur (130) eines oder mehrerer Zeichen eines Passworts (133);
- Anzeige durch die elektronische Vorrichtung des oder der während einer Verbergungszeit genannten Zeit eingegebenen Zeichen;
- am Ende der Verbergungszeit, Maskieren des oder der eingegebenen Zeichen durch die Vorrichtung.

2. Eingabeverfahren eines Passworts nach dem vorhergehenden Anspruch, **dadurch gekennzeichnet, dass** die Verbergungszeit so festgelegt ist, dass jedes eingegebene Zeichen vor oder während der Eingabe des nächsten Zeichens maskiert ist.

3. Eingabeverfahren nach Anspruch 1, **dadurch gekennzeichnet, dass** die Verbergungszeit so festgelegt ist, dass alle eingegebenen Zeichen nach der Eingabe des gesamten Passworts (133) maskiert sind.

4. Eingabeverfahren eines Passworts nach dem vorhergehenden Anspruch, **dadurch gekennzeichnet, dass** die Verbergungszeit als eine Dauer festgelegt wird, die ab dem Ende der Eingabe des Passworts (133) gemessen wird.

5. Eingabeverfahren eines Passworts (133) nach Anspruch 2, **dadurch gekennzeichnet, dass** die Verbergungszeit größer ist als eine Ablaufzeit (T1) aller auf einer gleichen Taste der reduzierten Tastatur (130) angeordneten Zeichen.

6. Eingabeverfahren eines Passworts nach einem der vorhergehenden Ansprüche, **dadurch gekennzeichnet, dass** es einen Schritt umfasst, der in der Ausführung eines Unterbrechungsbefehls der Verbergungszeit durch die elektronische Vorrichtung, ausgelöst durch den Benutzer, besteht, um frühzeitig das oder die eingegebenen Zeichen zu maskieren (132).

7. Eingabeverfahren eines Passworts (133) nach einem der vorhergehenden Ansprüche, **dadurch gekennzeichnet, dass** die Eingabe mittels der Tastatur (130) nach verschiedenen Eingabemodi durchgeführt werden kann.

## Claims

1. A process for inputting, by a user, an alphanumeric password (133) into an electronic device by means of a condensed keyboard (130), different letters and special characters being assigned to at least one of the keys of said condensed keyboard (130), the process being **characterized in that** the process comprises the following different steps:
- Inputting by the user of one or more characters of the password (133) by means of the ten key keyboard (130);
- Displaying by the electronic device the character(s) input during a duration called the concealment time;
- At the end of the concealment time, masking by the device of the character(s) input.

2. The process for inputting a password according to the previous claim **characterized in that** the concealment time is determined so that each input character is concealed before or during the inputting of the following character.

3. The inputting process according to claim 1 **characterized in that** the concealment time is determined so that the aggregate of input characters is concealed after inputting the aggregate of the password (133).

4. The process for inputting a password according to the previous claim **characterized in that** the concealment time is determined as being a duration measured from the end of inputting the password (133).

5. The process for inputting a password (133) according to claim 2 **characterized in that** the concealment time is greater than the scrolling time (T1) of all the characters disposed on the same key of the condensed keyboard (130).

6. The process for inputting a password according to one of the previous claims **characterized in that** the process comprises a step consisting of the electronic device executing an order to interrupt the concealment time initiated by the user in advance to mask (132) the input character(s).

7. The process for inputting a password (133) according to one of the previous claims **characterized in that** the inputting by means of the keyboard (130) may be performed according to various inputting methods.
